Europäisches Patentamt

European Patent Office

Office européen des brevets

(11) Publication number: **0 472 312 A2**

# EUROPEAN PATENT APPLICATION

(21) Application number: **91307096.7**

(22) Date of filing: **01.08.91**

(51) Int. Cl.⁵: **B29C 37/00**

(30) Priority: **24.08.90 JP 223538/90**

(43) Date of publication of application:
**26.02.92 Bulletin 92/09**

(84) Designated Contracting States:
**DE FR GB**

(71) Applicant: **NIPPON PAINT CO., LTD.**
**2-1-2, Oyodokita Kita-ku**
**Osaka-shi Osaka 530(JP)**

(72) Inventor: **Izumo, Takaharu**
**Yamazaki 789, Shimamoto-cho**
**Mishima-gun, Osaka(JP)**
Inventor: **Yamamoto, Satoshi**
**2-10-10, Nagaohigashi-cho**
**Hirakata-shi, Osaka(JP)**

(74) Representative: **Pacitti, Pierpaolo A.M.E. et al**
**Murgitroyd and Company Mitchell House 333**
**Bath Street**
**Glasgow G2 4ER Scotland(GB)**

(54) **Method for making a film coating for moldings.**

(57) A RIM molding technique includes a mold having a mold plate which is permitted to move in response to the injection of a liquid resin material, thereby permitting injection at a low injection pressure. The technique is applied to applying a molded resin coating film on the surface of a resin molding such as, for example, a fender of an automobile. In one embodiment, the molding is formed by blending resin component A with resin component B immediately prior to injection into the mold cavity. The coating film is similarly blended, and injected as the mold plates are permitted to move apart to accommodate the added material. In another embodiment, the molding is formed by compression molding of a resin composition sheet. The coating film is injected over the resulting molding while the mold plates are permitted to move apart. A resin handling system circulates resin component A and resin component B in isolated paths until it is time for blending the components and injecting them into the mold cavity. At that time, the blender blocks the outlets, and directs the two components to a blending area. The blending area communicates with an injection nozzle for injecting the resulting blend into the mold cavity. Material A generally contains an active hydrogen component (polyamine) and material B generally contains an isocyanate component.

Fig.3

EP 0 472 312 A2

## BACKGROUND OF THE INVENTION

The present invention relates to making a resin coating film for resin moldings, and more particularly apparatus and method for molding a resin coating film onto a resin molding as part of a secondary molding process.

Recently, resin moldings have been used extensively in the production of such car parts as bumpers, fenders and air spoilers. To finish these resin moldings, attractive resin coating films are applied to their outer surfaces. This is done by applying a protective outer resin coating film over an appearance resin undercoating film. In some cases, an intermediate coat is applied between the undercoat and the top coat.

When the resin molding is formed in a metal mold, the outer resin coating film is applied to its surface using the same forming mold.

A current method for molding and applying a resin coating film first forms the resin molding from resin composition stock using a heated compression mold. When the molding is formed, the mold is opened and resin coating material is applied to the surface of the molding. The compression mold is then reheated and closed to form the resin coating film on the resin molding. This method is detailed in Japanese Official Patent Provisional Publication, Showa 55-55843. A problem associated with this method is that opening and reclosing the mold to apply the resin coating material, allows mold flashing and dust to enter the mold, degrading the final product. A second problem is the time necessary to open and close the mold. This time is significant, it frequently consumes 20% of the time used to accomplish the entire process.

A second method for forming a resin molding and then applying a resin coating film is similar to the first. A resin molding is first formed from resin composite stock in a heated compression mold. When the resin molding is formed, the mold remains locked. The resin coating material is injected into the closed mold at high pressure to form an even coating on the formed molding in the mold. This method is detailed in Japanese Official Patent Provisional Publication, showa 61-273921.

This method solves the problems of opening and closing the mold to apply the resin coating film. However, the high injection pressures required dictates the use of expensive, high grade molding apparatus and careful production control. Injection of the resin coating material requires pressures exceeding 250 kg/cm$^2$. This method also requires strict control of the pot life of the resin coating material, which must be injected into the mold while it is still fluid. Because the monomer and/or prepolymer, curing agent and curing accelerator that make up the resin coating material must be blended some time before it is injected into the mold, curing of the resin coating material begins before it enters the mold. If the resin coating material is not injected during its pot life, it can lose its fluidity and cease flowing as it gels, clogging the injection pipes of the mold. Once the pot life of the resin coating material expires, a proper resin coating film might never form on the resin molding, even if the fluidity of the resin coating material is retained.

A reaction injection molding (RIM) method has been proposed where the pot life of the coating material is a problem. In the RIM method, the ingredients of the resin coating material are blended just in advance of the coating step, so that the blended resin coating material is injected into the mold immediately.

However, this method cannot be combined with high pressure injection because the flow of the resin coating material would be restricted by the high pressure in its flow path. In addition, it is difficult to synchronize the injection of the resin coating material with the curing of the resin molding in the mold. As the resin molding to be coated cures, it loses resilience. If curing proceeds too far, the resin molding may prevent the flow of coating material into the mold.

## OBJECTS AND SUMMARY OF THE INVENTION

Accordingly, it is an object of the invention to provide a method for making a film coating for moldings that overcomes the drawbacks of the prior art.

It is a further object of the invention to provide a method for applying a resin coating film to a resin molding with low injection pressure, while retaining the resin molding in a closed mold.

It is a still further object of the invention to provide a method for forming one or more intermediate resin coatings on a resin molding while retaining the resin molding in a closed mold.

Briefly stated, there is provided a RIM molding technique that includes a mold having a mold plate which is permitted to move in response to the injection of a liquid resin material, thereby permitting injection at a low injection pressure. The technique is applied to applying a molded resin coating film on the surface of a resin molding such as, for example, a fender of an automobile. In one embodiment, the molding is formed by blending resin component A with resin component B immediately prior to injection into the mold cavity. The coating film is similarly blended, and injected as the mold plates are permitted to move apart to accommodate the added material. In another embodiment, the molding is formed by compression molding

2

EP 0 472 312 A2

of a resin composition sheet. The coating film is injected over the resulting molding while the mold plates are permitted to move apart. A resin handling system circulates resin component A and resin component B in isolated paths until it is time for blending the components and injecting them into the mold cavity. At that time, the blender blocks the outlets, and directs the two components to a blending area. The blending area communicates with an injection nozzle for injecting the resulting blend into the mold cavity.

According to an embodiment of the invention, there is provided a method for applying a resin coating film on a resin molding, comprising: closing facing surfaces of two mold plates to form a closed cavity, filling the closed cavity with a resin compound, applying sufficient compression force to the two mold plates to mold the resin molding, injecting a liquid resin material into the closed cavity, permitting one of the two mold plates to move during the step of injecting to permit the injecting to be performed at low injection pressure, and then restoring the compression force for final molding of the resin molding with a coating of the liquid resin material to cure thereon.

According to a feature of the invention, there is provided an apparatus for forming a resin molding with a resin coating thereon comprising: a mold, the mold including a first mold plate and a second mold plate, means for supporting the first mold plate in a fixed position, means for moving the second mold plate toward the first mold plate for closing the mold and away from the first mold plate for opening the mold, facing surfaces of the first and second mold plates forming a cavity between them when the mold is closed, first means for supplying a first resin material to the cavity, means for applying a compression force to the first resin material to form a resin molding in the cavity, second means for supplying a second resin material to the cavity, the second resin material being a liquid resin material effective to form a resin coating film on the resin molding, and means for blending a resin material A with a resin material B in a predetermined proportion, and in a predetermined quantity, to form the second resin material immediately prior to supplying the second resin material to the cavity, and means for permitting the second mold plate to move during supplying of the second resin material, whereby the injecting can be performed at low injection pressure.

According to a further feature of the invention, there is provided a method for forming a resin molding with a resin coating thereof comprising: filling a cavity of a mold with a first resin material, compressing the first resin material in the mold to form a molding, injecting a liquid second resin material into the mold to form the resin coating on the molding, and permitting the cavity to enlarge during the step of injecting, whereby the step of injecting is performed at a low injection pressure.

According to a still further feature of the invention, there is provided apparatus for handling a resin material A and a resin material B, comprising: first means for pumping the resin material A in a first closed path from a material A tank to a blender and back to the material A tank, second means for pumping the resin material B in a second closed path from a material B tank to the blender and back to the material B tank, means for isolating the first closed path from the second closed path, whereby the resin material A and the resin material B are prevented from reacting with each other, means for joining the first closed path and the second closed path, whereby the resin material A and the resin material B are blended to form an injection resin material, means for controlling a proportion of the resin material A and the resin material B in the injection resin material, means for injecting a predetermined quantity of the injection resin material from the blender into a cavity, and means for again isolating the first closed path and the second closed path, following injection of the predetermined quantity, whereby the first and second means for pumping are again enabled to pump the resin material A in the first closed path and the resin material B in the second closed path.

According to a still further feature of the invention, there is provided a blender for blending a resin material A and a resin material B, comprising: a first inlet for permitting the resin material A to enter the blender, a first outlet for permitting the resin material A to exit the blender, a first channel communicating the first inlet with the first outlet, whereby the resin material A is permitted to flow, substantially unimpeded, from the first inlet to the first outlet, a second inlet for permitting the resin material B to enter the blender, a second outlet for permitting the resin material B to exit the blender, a second channel communicating the second inlet with the second outlet, the first and second channels being separate from each other, whereby the resin material A and the resin material B remain isolated from each other, a blending area, an injector nozzle communicating with the blending area, and means for communicating the first inlet and the second inlet with the blending area, and for isolating the first outlet and the second outlet from their respective inlets, whereby the material A entering the first inlet is blended with the material B entering the second inlet to form a blended resin, with the blended resin issuing from the injector nozzle into a cavity.

The above and other objects features and advantages of the present invention will become apparent from the following description read in conjunction with the accompanying drawings, in which like reference numbers designate the same elements.

3

## BRIEF DESCRIPTION OF THE DRAWINGS

Figs. 1a through 1e are cross sectional views showing steps in a molding process of the prior art.

Figs. 2a through 2d are cross sectional views steps in a second molding process of the prior art.

Fig. 3 is a simplified cross section of a mold and a block diagram of a reaction injection molding device such as used in the present invention.

Fig. 4 is a hydraulic diagram showing the flow of coating ingredients through the supply components of the device of Fig. 3.

Figs. 5a and 5b are cross sectional views, showing the blending of materials in the supply components of the molding device of Fig. 3.

Figs. 6a through 6f are cross sectional views of the steps in molding using the molding device of Fig. 3 according to the present invention.

## DETAILED DESCRIPTION

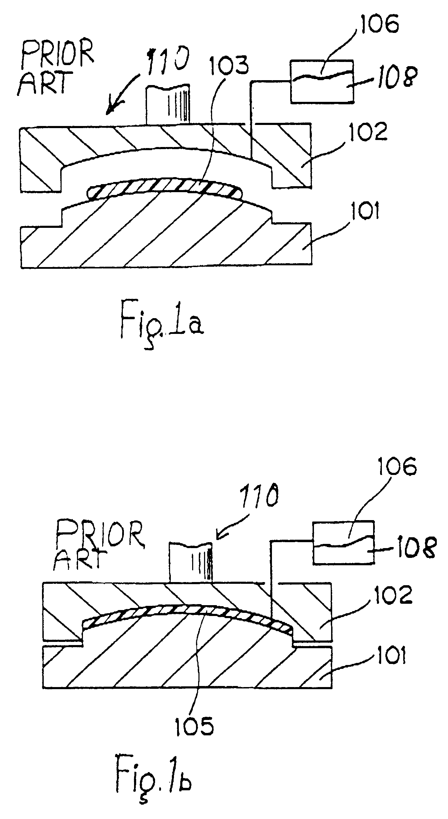

Referring to Figs. 1a through 1e, a compression mold 110 of the prior art has a lower fixed metal mold plate 101 above which is an upper metal mold plate 102. The upper metal mold plate 102 is movable up and down to open and close compression mold 110. As shown in Fig. 1a, a resin composition sheet 103 is disposed on an upper surface of lower fixed metal mold plate 101. A coating material source 106 includes means for applying resin fluid coating material 108 through upper metal mold plate 102. Both lower fixed metal mold plate 101 and upper metal mold plate 102 are heated by a conventional means (not shown).

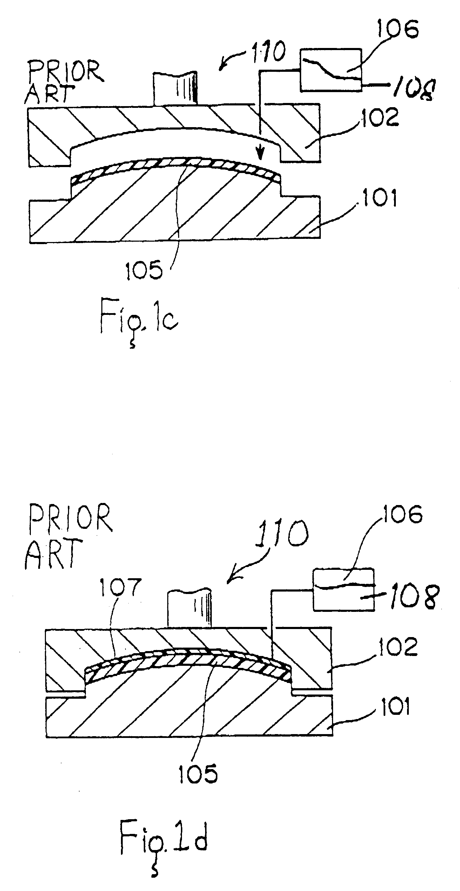

As shown in Fig. 1b, upper metal mold plate 102 is pressed down on lower fixed metal mold plate 101 by a conventional drive means (not shown) with sufficient force to force resin composition sheet 103, heated by the heated surfaces contacting it, to flow, thereby forming a resin molding 105. After resin molding 105 is formed, the drive means raises upper metal mold plate 102 to open compression mold 110, as shown in Fig. 1c.

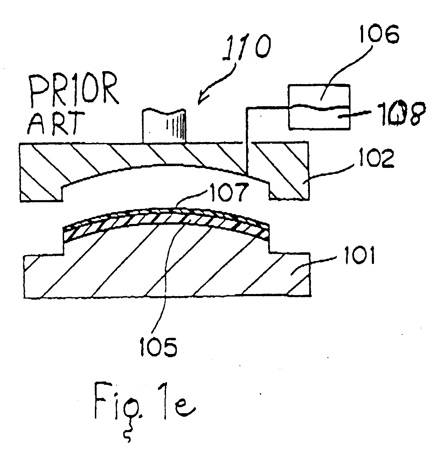

With compression mold 110 open, fluid coating material 108 is applied by coating material source 106 to the surface of resin molding 105. Upper metal mold plate 102 is again lowered, causing fluid coating material 108 to be formed into a resin coating film 107 bonded on the surface of resin molding 105, as shown in Fig. 1d. Upper metal mold plate 102 is a now raised, as shown in Fig. 1e, to open compression mold 110 for the removal of completed resin molding 105 covered with resin coating film 107.

As was previously mentioned, the disadvantages of this method of applying resin coating film 107 to resin molding 105 include the significant time lost in opening and closing compression mold 110, as much as 20 percent of the total process time, and the possibility of mold flash and other contaminants entering compression mold 110 while it is open.

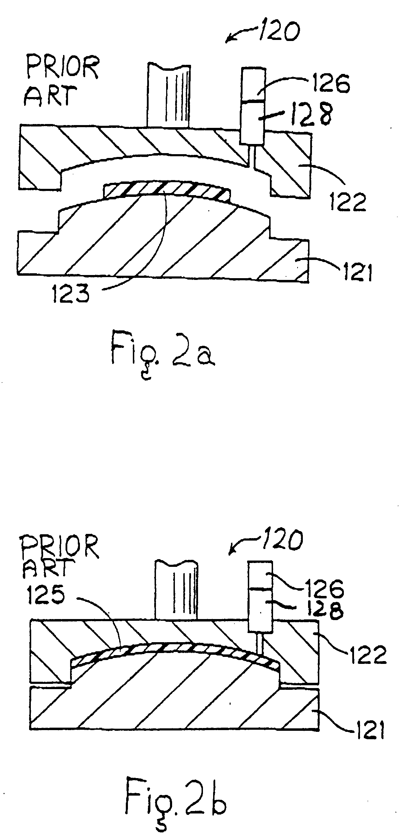

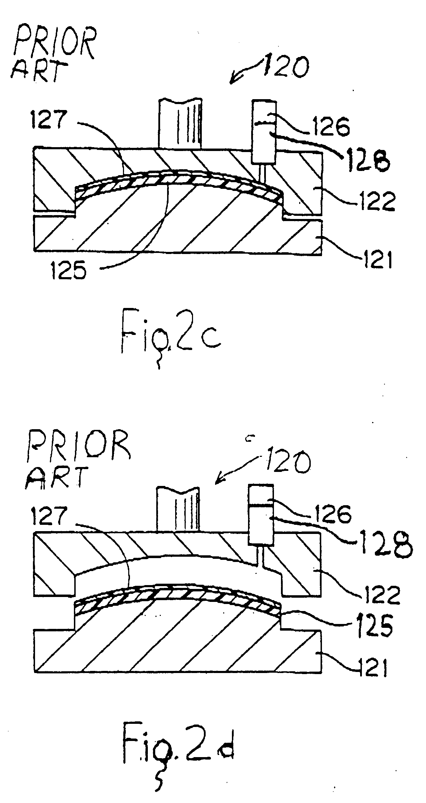

Referring now to Figs, 2a through 2d, it can be seen that the operation of prior art compression mold 120 is similar to that of compression mold 110 except as follows. After forming a resin compression sheet 123 of Fig 2a into a resin molding 125 of Fig 2b, by pressing an upper metal mold plate 122 onto a lower metal mold plate 121, upper mold plate 122 is not raised to allow the application of a resin coating film 127. Instead, the mold remains locked and, as shown in 2c, a coating material source 126 injects a resin coating material 128 material for a resin coating film 127 into the closed compression mold 120 under high pressure. This pressure must be high in order to force the material of resin coating film 127 between upper mold metal plate 122 and the upper surface of resin molding 125. Resin coating film 127 is formed and bonded to resin molding 125 by heat and compression in compression mold 120. Compression mold 120 is then opened as shown in Fig. 2d to remove finished resin molding 125 with its resin coating film 127.

As previously mentioned, the high pressure injection of coating material 128 requires expensive precision equipment. Other problems associated with this method result from the brief pot life of coating material 128. Once the ingredients are mixed, coating material 128 begins to cure, and must be injected into compression mold 120 while it is still fluid, or is still able to be formed on the resin molding 125. The timing of this operation is critical because the ingredients of coating material 128 must be mixed and loaded into coating material source 126 before the injection pressure is applied. Timing is made even more critical in this application because resilience of resin molding 125 is necessary to allow the ingredients of coating material 128 to properly coat resin molding 125. If injection of these ingredients is delayed, the curing of resin molding 125 may have progressed to where it lacks the resilience necessary to allow the injection of coating material 128.

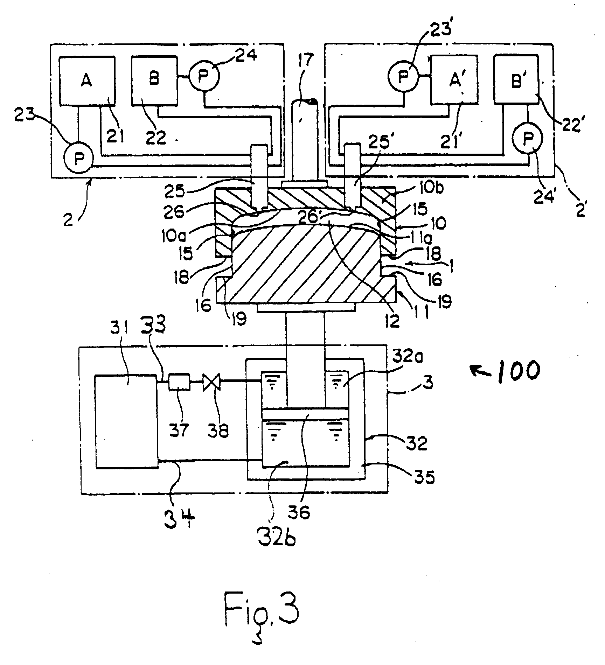

Referring now to Fig. 3, a metal mold 1 of a reaction injection molding (RIM) instrument 100 of the present invention includes an upper metal mold 10 and a lower metal mold 11. Upper metal mold 10 is supported in a fixed position by a supporting shaft 17. Lower metal mold 11 is attached to a shaft of a piston 36 which extends upwardly from a cylinder 32 of a mold drive 3. A concave lower surface 10a of upper metal mold 10 is complementary to, and fits over, a convex upper surface 11a of lower metal mold 11, to form a cavity 12. A cross sectional shape of lower surface 10a is represented by a contour line 15. A cross sectional shape of upper surface 11a is represented by a contour line 16. The proper mutual alignment of upper and lower metal molds 10 and 11 is assured by the close fit of an upper mold border 18 and a lower mold border 19. In some variations a spacer or stopper (not shown) may be fitted between upper and lower borders 18 and 19 to assure correct alignment. When upper and lower metal molds 10 and 11 are closed, their surfaces define the shape of a resin molding (not shown) that will be formed in cavity 12 between them.

Piston 36 is slideably fitted into cylinder 32 of mold drive 3. The shaft of piston 36 forms a seal with walls 35 of cylinder 32, with piston 36 dividing cylinder 32 into an oil filled upper chamber 32a and an oil filled lower chamber 32b. As shown in the figure, a first line 33 from an oil pressure pump 31 is connected to upper chamber 32a of cylinder 32 through a flow control valve 37 and an electromagnetic valve 38. A second line 34 from oil pressure pump 31 is connected to lower chamber 32b.

To close metal mold 1, oil pressure pump 31 pumps oil from upper chamber 32a to lower chamber 32b. At this time, electromagnetic valve 38 opens. The rate of flow of the oil is controlled by flow control valve 37. Piston 36 moves up as the volume of oil increases in lower chamber 32b and decreases in upper chamber 32a, thereby driving attached lower metal mold 11 up. A reverse procedure lowers lower metal mold 11 to open metal mold 1.

When electromagnetic valve 38 is closed, lower metal mold 11 is locked in its current position.

Blenders 25 and 25' of material sources 2 and 2' are connected to opposite sides of upper metal mold 10 with their injecting openings 26 and 26', respectively, at lower surface 10a. Liquid material tanks A and B, 21 and 22, store the two component liquid materials A and B which will be blended to form a resin molding (not shown). Liquid material tanks 21 and 22, are connected to blender 25 directly and through piston pumps 23 and 24, respectively. When material is not being fed to blender 25, liquid material tanks A and B are each closed systems with their respective piston pumps 23 and 24 continually circulating the stored liquid materials through separate paths.

When liquid materials A and B are to be blended and injected into the mold, liquid material tanks 21 and 22 become parts of 8 connected system with their respective piston pumps 23 and 24 forcing their respective liquid materials A and B, in suitable proportions and quantity, into blender 25. The proportions of the liquid materials to be blended are controlled by the relative volumes of pumps 23 and 24.

The operation of material source 2' is identical to that of material source 2, wherein primed reference designators perform the same functions as the unprimed reference designators of material source 2.

In the present invention, blender 25 can be a conventional injection device for RIM systems. A suitable part for use as blender 25 (and 25') used with RIM instruments includes the MC-100 series and MC-200 series, manufactured by Polyurethane Engineering Co., Ltd.

Materials commonly used for making resin moldings or resin coating films are thermoplastic and thermosetting resin materials that can be formed by polymerization and/or crosslinking. These resin materials are generally monomers or prepolymers that form resin moldings or coatings by curing with a free radical reaction and/or condensation polymerization. Generally, these materials are mixtures of monomers and prepolymers. An example of a resin molding that might be made from these materials is an automobile fender. The resin coating film formed might be an undercoating of that fender.

Resin molding materials include, for example polyolefin/rubber-based thermoplastic resin, polycarbonate/polyamide-based thermoplastic resin (NYLON), unsaturated polyester-based resin, urea-based resin, and cyclopendtadienne-based resin.

Preferred resins for coating films include, for example, unsaturated polyester-based resin, epoxy-based resin, urethane-based resin, urethane/urea-based resin, urea-based resin and cyclopentadiene-based resin. For this application a combination of a number of resins may be used.

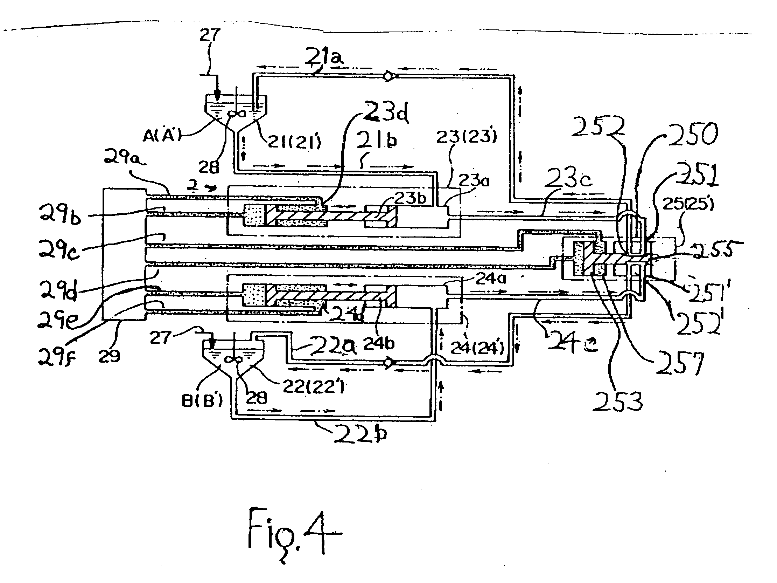

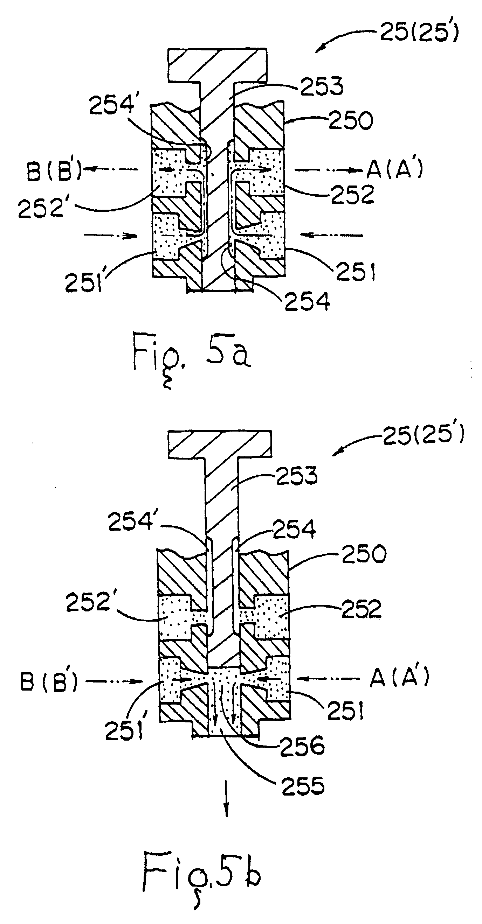

Referring to Figs. 4, 5a and 5b, there is shown a detailed hydraulic diagram of material sources 2 and 2' and cross sections of blender 25 in two operating conditions. Because material sources 2 and 2' are identical, only material source 2 is described in detail.

Liquid material tanks A and B, 21 and 22, are connected to outlets 252 and 252' of a blending cylinder 250 of blender 25 by return tubes 21a and 22a, respectively. Feed tubes 21b and 22b connect outlets of liquid material tanks A and B, 21 and 22 to inlets of weighing cylinders 23a and 24a of piston pumps 23 and 24, respectively. Outlets of weighing cylinders 23a and 24a are connected by tubes 23c and 24c to inlets 251 and 251' of blending cylinder 250.

An oil pressure controller 29 is connected to a forward chamber of a piston cylinder 23d by an oil pressure tube 29a and to a rear chamber of piston cylinder 23d by an oil pressure tube 29b. An oil pressure tube 29f connects oil pressure controller 29 to a forward chamber of a piston cylinder 24d and an oil pressure tube 24e connects oil pressure controller 29 to a rear chamber of piston cylinder 24d. Oil pressure controller 29 operates pumps 23 and 24 by moving oil between forward and rear chambers of piston cylinders 23d and 24d.

Oil pressure tubes 29c and 29d connect oil pressure controller 29 to forward and rear chambers of an operating cylinder 257 of blender 25. Oil pressure controller 29 drives a blender piston 253 that is slidably disposed in blender 25 by moving oil between the forward and rear chambers of operating cylinder 257. An end of blender piston 253 forms a slidable seal with walls of operating cylinder 257 to divide it into forward and rear chambers.

A nitrogen gas supply nozzle 27 and a stirrer 28 are disposed in each of liquid material tanks A and B, 21 and 22. Nitrogen gas and the rotation of stirrer 28 constantly agitate stored liquid materials A and B.

When blender piston 253 is in its forward position, as shown in Fig. 5a, a flow path 254 connects inlet 251 with outlet 252, allowing the free flow of liquid material A between inlet 251 and outlet 252, without allowing liquid material A to enter a blending area 256 in blending cylinder 250. At the same time, a flow path 254' connects inlet 251' with outlet 252', allowing the free flow of liquid material B between inlet 251' and outlet 252', without allowing liquid material B from entering blending area 256.

When blender piston 253 is moved to a rear position, as shown in Fig. 5b, inlets 251 and 251' are open to blending area 256. Flow paths 254 and 254' in blender piston 253 move toward the rear, disconnecting inlets 251 and 251' from outlets 252 and 252'.

Liquid materials A and B enter blending area 256 between blender piston 253 and an injector nozzle 255 through inlets 251 and 251'. When predetermined quantities of each of liquid materials A and B (to be described later) are present, oil pressure controller moves blender piston 253 forward. This both closes inlet ports 251 and 251' ending the flow of liquid materials A and B into blending area 256 and increases the pressure in blending area 256 accelerating the blending of liquid materials A and B. As blender piston 253 continues forward, blended liquid material is injected into cavity 12 of metal mold 1 (Fig. 3).

During operation, blender piston 253 is initially set to its forward position closing access to blending area 256 and allowing materials A and B to freely recirculate as previously described. The initial position of pistons 23b and 24b of piston pumps 23 and 24 are set to adjust the volume of weighing cylinders 23a and 24a to set a desired total quantity and blending ratio of liquid materials A and B. The positioning of pistons 23b and 24b is controlled by oil pressure controller 29 by controlling the volume of oil in forward and rear chambers of piston cylinders 23d and 24d, respectively.

When liquid materials A and B are to be blended and injected into cavity 12 of metal mold 1, oil pressure controller 29 drives blender piston 253 to its rear position. This blocks outlet 252 and 252' as previously described and opens inlets 251 and 251' to blending area 256. Pistons 23b and 24b are then driven forward by oil pressure controller 29, pumping liquid materials A and B, respectively, into blending area 256. While blending of liquid materials A and B begins immediately, it is accelerated as oil pressure controller 29 drives blender piston 253 forward. This action causes blender piston to block inlets 251 and 251', preventing excess liquid material from flowing into blending area 256 and drives the blended liquid material through injector opening 255 into cavity 12 of metal mold 1.

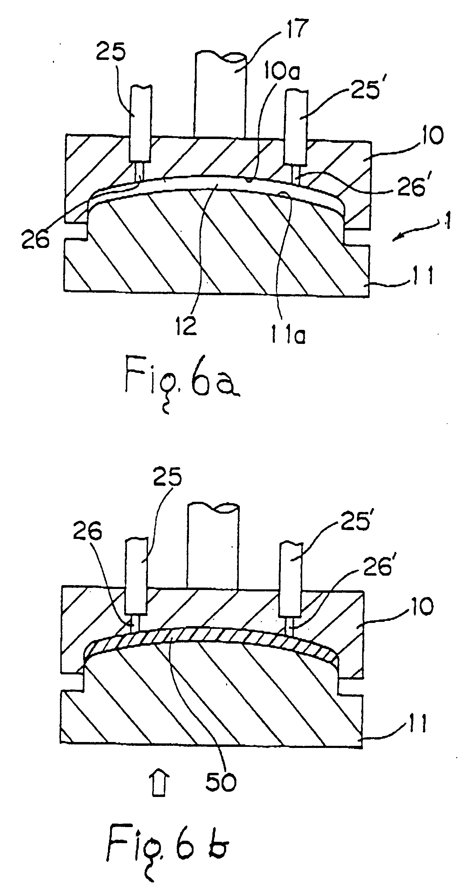

Referring now to Figs. 3 and 6a through 6f, lower metal mold 11 of preheated metal mold 1 is raised to close with upper metal mold 10 to form defined cavity 12 as shown in Fig. 6a. Metal mold 1 may be preheated to meet the requirements of a resin molding material being molded; some resin molding materials cure at room temperature.

Blended liquid materials for making a resin molding 50, prepared as described above, is then injected into cavity 12 by blender 25 through injecting opening 26. During the step of the injecting, cavity 12 is pressurized by the action of mold drive 3, which presses lower metal mold 11 up toward upper metal mold 10 as shown in Fig. 6b.

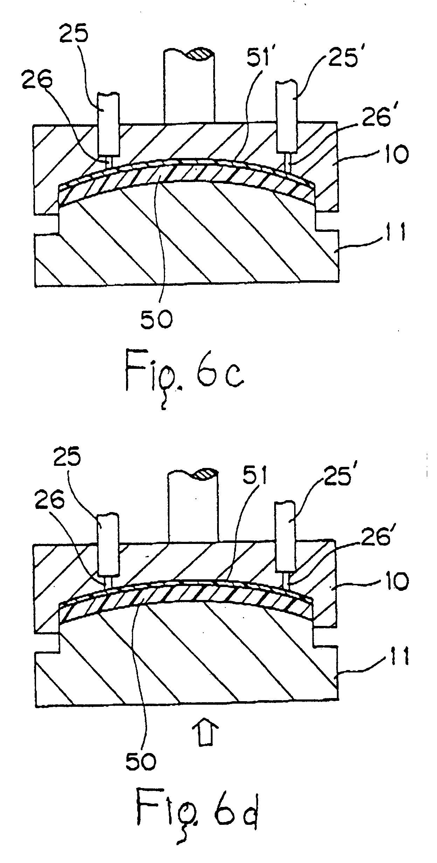

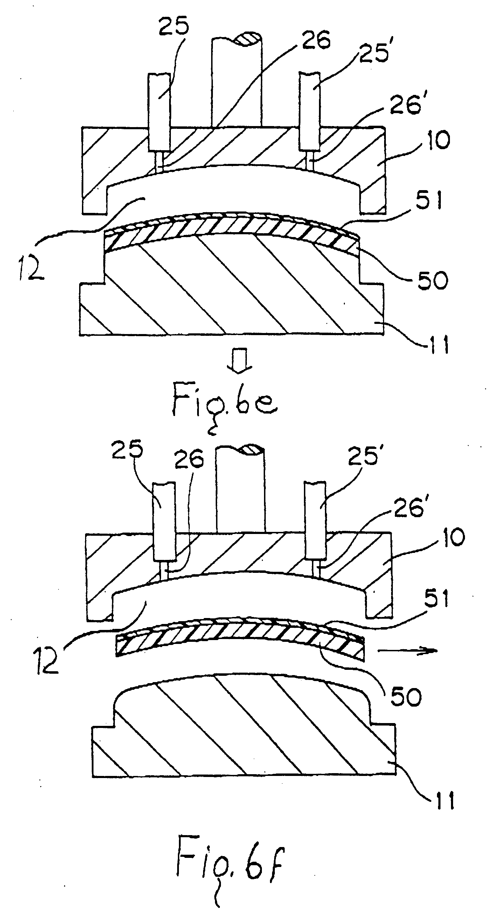

When resin molding 50 is sufficiently cured, blended material for forming resin coating film 51 is injected into cavity 12 by blender 25' to coat the surface of resin molding 50. This is done without opening metal mold 1, as shown in Fig. 6c. A slight reduction in the upward force applied to lower metal mold 11 allows the material of resin coating film 51 to enter cavity 12. To accomplish this, oil pressure pump 31 allows piston 36 to be pressed downward, by the inflow of blended material, just enough to admit the volume of resin coating film 51. This assures that the blended liquid material of the resin coating film 51 is evenly distributed over the surface of resin molding 50.

In the above described case, the up and down driving of piston 36 and the movement of blender 25' is linkaged and cavity 12 opens in correspondence with the injected amount when the material for forming resin coating film 51 is injected.

Beside this, the following construction may be used: Lower metal mold 11 is pushed by a weak force (for example, lower metal mold 11 moves toward upper metal mold 10 with a force given by a spring), cavity 12 is maintained under a condition of carrying out the molding, and thus, lower mold 11 is pushed even by an injecting pressure of the material for forming resin coating 51 and cavity 12 spontaneously opens in correspondence with the injected amount of the material.

Finally, after the desired amount of material to form resin coating film 51 is injected into cavity 12, as shown in Fig 6d, an upward force is reapplied to cavity 12 to form resin coating film 51 on the surface of resin molding 50. When resin coating film 51 is sufficiently cured, lower metal mold 11 is lowered from upper metal mold 10, opening metal mold 1, as shown in Fig. 6e. This allows finished resin molding 50 with bonded resin coating film 51 to be removed from metal mold 1, as shown in Fig. 6f.

The following are examples of preferred formulations for use with the present invention:

RESIN MOLDING

The material for making resin moldings include a liquid material A, that contains an active hydrogen containing components (polyamine) and a liquid material B that contains an isocyanate component. Liquid materials A and B are blended together just before they are injected into metal mold 1 to be molded.

Liquid material A contains diethyltoluenediamine and zinc stearate in the proportions listed below. Liquid material B contains only crude diphenylmethanediisocyanate.

--LIQUID MATERIAL A--

polyamine (Trade mark Jeffamin D-2000, Texaco Chemical Co., Ltd.)
average molecular weight = about 2000;
active hydrogen equivalent = 520
diethyltoluenediamine (Trade mark Ethacure 100, Ethyl Co., Ltd)
average molecular weight 178
zinc stearate

--LIQUID MATERIAL B--

crude diphenylmethanediisocyanate (Trade mark Millionate MTL, Nippon Polyurethane Kogyo Co., Ltd.)
NCO equivalent = about 145g

| -FORMULATED PROPORTIONS OF EACH COMPONENT PARTS BY WEIGHT FOLLOWING BLENDING- | |
| --- | --- |
| polyamine | 70 |
| diethyltoluenediamine | 30 |
| zinc stearate | 0.5 |
| crude diphenylmethanediisocyanate | 62 |

| --MOLDING CONDITIONS-- | |
| --- | --- |
| thickness of resin moldings | 3mm |
| length | 400mm |
| width | 300mm |
| molding temperature | 70° C |
| molding pressure | 150 kg/cm$^2$ |
| time | 1 minute |

RESIN COATING FILM

The liquid materials for making resin coating films include a liquid material A that contains an active hydrogen containing component (polyamine) and a liquid material B that contains an isocyanate component.

Liquid materials A and B are blended together just before being injected into metal mold 1 to form a resin coating film on a resin molding.

In addition to the polyamine, liquid material A contains diethyltoluenediamine and zinc stearate. Liquid material B consists essentially of hexamethylenediisocyanate prepolymer and crude diphenylmethanediisocyanate.

--LIQUID MATERIAL A--

polyamine (Trade mark Jeffamin D-2000, Texaco Chemical Co., Ltd.)
average molecular weight = about 2000;
active hydrogen equivalent = 520
diethyltoluenediamine (Trade mark Ethacure 100, Ethyl Co., Ltd)
average molecular weight 178
zinc stearate

--LIQUID MATERIAL B--

hexamethylenediisocyanate prepolymer (Trade mark Colonate EH, Nippon Polyurethane Kogyo Co., Ltd.)
NCO equivalent = about 197
crude diphenylmethanediisocyanate (Trade mark Millionate MTL, Nippon Polyurethane Kogyo Co., Ltd.)
NCO equivalent = about 145g

| -FORMULATED PROPORTIONS OF EACH COMPONENT PARTS BY WEIGHT FOLLOWING BLENDING- | |
|---|---|
| polyamine | 80 |
| diethyltoluenediamine | 20 |
| zinc stearate | 0.5 |
| hexamethylenediisocyante prepolymer | 26 |
| crude diphenylmethanediisocyanate | 26 |

| --MOLDING CONDITIONS-- | |
|---|---|
| injection time | about 1.2 seconds |
| thickness of resin coating film | about 0.1mm |
| temperature | 70° C |
| pressure | 150 kg/cm$^2$ |
| time | 1 minute |

Curing of resin molding 50 may not be complete when the material for resin coating film 51 is applied, and usually continues during the formation and curing of resin coating film 51.

It should be noted that the present invention is not limited to the aforedescribed embodiments. The materials for making a resin molding or a resin coating film may be blended from other materials or from three or more separate materials, without departing from the spirit and scope of the invention. These materials may contain added reinforcements, such as for example a glass fiber. Conductive materials such as conductive carbon or conductive metal compounds also may be added, as required, to these materials, as well as a mold lubricant. There also may be added to these materials various ingredients found in common paints.

Instead of injecting the two components of resin molding 50 of Fig. 6b, as described above, resin molding may be compression molded in a manner corresponding to the compression molding of resin composition sheet 103, shown in Fig. 1a. Resin coating film 51 may then be added over resin molding 50 using RIM instrument 100 as described above. Generally, a material for making resin moldings 50 in this manner is called a sheet mold compound (SMC) or a stampable sheet.

A plurality of liquid materials may be blended just prior to injection into a mold by using a static mixer without using RIM instrument 100. However, the material for making resin moldings and resin coating films may be the same. (For example, this material may be an acrylic polyester-based resin composition.) In this case, the injecting device may be an in-mold coating system of a high pressure type made by the USA Morrel Co., Ltd., or equivalent.

As previously described with reference to Fig. 3 the up and down movement of piston 36, controlled by oil pressure pump 31 and the action of material source 2', allows cavity 12 to open as it admits entry of the preselected quantity of blended material for resin coating film 51. A similar result may be achieved by supporting lower metal mold 11 with a weak resilient force, such as that which is provided by a weak spring. The slight injecting force of blended material for resin coating film 51 would be sufficient to push lower metal mold 11 down just enough to admit the blended material.

The following are some of the advantages offered by the present invention:

Injecting material for the formation of resin coating film 51 into cavity 12 without opening metal mold 1 assures that molding flash will not fold back into the mold. In addition, keeping metal mold 1 closed excludes other contaminants, preventing them from degrading the finished product.

No time is lost in opening and closing the mold to apply the material for the resin coating film after the resin molding is formed.

Expensive high pressure injection equipment is not necessary because the material for forming the resin coating film is injected at low pressure.

Because the liquid materials for the resin molding and coating films are blended just as they are injected into the mold, material pot time is not a factor.

The RIM mold is itself resilient, allowing material for a resin coating film to enter the mold even as the resin molding being coated loses resilience. This makes the timing of the molding and coating processes less critical.

Because of the resilient response of the RIM mold to the addition of the resin material for the resin coating film, the resin molding can be coated with more than one layer of resin coating film. There may be applied, for example, an intermediate resin coating film, which is in turn coated by an outer resin coating film.

Having described preferred embodiments of the invention with reference with reference to the accompanying drawings, it is to be understood that the invention is not limited to those precise embodiments, and that various changes and modifications may be affected therein by one skilled in the art without departing from the scope or spirit of the invention as defined in the appended claims.

## Claims

1. A method for applying a resin coating film on a resin molding, comprising:

   closing facing surfaces of two mold plates to form a closed cavity;

   filling said closed cavity with a resin compound;

   applying sufficient compression force to said two mold plates to mold said resin molding;

   injecting a liquid resin material into said closed cavity;

   permitting one of said two mold plates to move during the step of injecting to permit the injecting to be performed at low injection pressure; and then

   restoring said compression force for final molding of said resin molding with a coating of said liquid resin material to cure thereon.

2. The method of claim 1, wherein the step of filling includes placing a sheet type resin compound on one of said mold plates prior to closing said closed cavity.

3. The method of claim 1, wherein:

   the step of filling includes injecting a blended liquid material into said closed cavity;

   said blended liquid material including at least a liquid material A and a liquid material B, wherein curing of said resin molding material is prevented until said liquid materials A and B are blended; and

   blending said liquid materials A and B just prior to injection into said cavity.

4. The liquid material of claim 3, wherein:

   said liquid material A includes an active hydrogen containing component; and

   said liquid material B is an isocyanate component.

5. The method of claim 1, wherein;

   said liquid resin material includes at least a liquid material A and a liquid material B of types which, when blended, begin to cure; and

blending said liquid material A and liquid material B just before the step of injecting.

6. The liquid materials of claim 5, wherein;
said liquid material A includes an active hydrogen containing component; and
said liquid material B includes an isocyanate component.

7. The method of claim 1, further comprising:
injecting a further amount of a liquid resin material into said closed cavity;
permitting said one of said two mold plates to move during the step of injecting a further amount to permit the step of injecting a further amount to be performed at low injection pressure; and then
restoring said compression force for final molding of said resin molding with two coating of liquid resin materials curing thereon.

8. The resin molding of claim 3, wherein:
at least one of said liquid material A and said liquid material B contains at least one of reinforcing fibers, electrically conductive particles and a material found in paint.

9. The resin molding of claim 5, wherein:
at least one of said liquid material A and said liquid material B
contains at least one of reinforcing fibers, electrically conductive particles and a material found in paint.

10. An apparatus for forming a resin molding with a resin coating thereon comprising:
a mold;
said mold including a first mold plate and a second mold plate;
means for supporting said first mold plate in a fixed position;
means for moving said second mold plate toward said first mold plate for closing said mold and away from said first mold plate for opening said mold;
facing surfaces of said first and second mold plates forming a cavity between them when said mold is closed;
first means for supplying a first resin material to said cavity;
means for applying a compression force to said first resin material to form a resin molding in said cavity;
second means for supplying a second resin material to said cavity;
said second resin material being a liquid resin material effective to form a resin coating film on said resin molding; and
means for blending a resin material A with a resin material B in a predetermined proportion, and in a predetermined quantity, to form said second resin material immediately prior to supplying said second resin material to said cavity; and
means for permitting said second mold plate to move during supplying of said second resin material, whereby the injecting can be performed at low injection pressure.

11. The apparatus of claim 10, wherein;
said means for applying a compression force includes a piston in a cylinder;
a first end of said piston being slidably inserted in said cylinder;
a second end of said piston being affixed to said second mold plate;
a pump for varying pressure in said cylinder;
said first end of said piston sliding into and out of said cylinder in response to said varying pressure in said cylinder;
said second mold plate moving with said piston to open and close said cavity;
said piston being urged in a closing direction to apply a compression pressure to said second mold plate; and
means responsive to said low pressure injection of said second blended liquid material for varying said compression pressure to admit said second blended liquid material at low injection pressure.

12. The apparatus of claim 10, wherein:
said means for applying a compression force includes a spring;
said spring being effective for urging said second mold plate in a direction to apply a resilient compression force to said second mold plate; and

said spring supplying a low enough value of said resilient compression force to permit said cavity to open sufficiently to admit said second resin material.

13. The apparatus of claim 10, wherein said means for blending includes: means for separately storing said resin material A and said resin

material B; separate means for pumping said resin materials A and B into said means for blending; each of said separate means for pumping including means for measuring a predetermined quantity of said resin materials A and B for blending; and

said means for blending including means for injecting said second resin material into said cavity.

14. A method for forming a resin molding with a resin coating thereof comprising:

filling a cavity of a mold with a first resin material;

compressing said first resin material in said mold to form a molding;

injecting a liquid second resin material into said mold to form said resin coating on said molding; and

permitting said cavity to enlarge during the step of injecting, whereby the step of injecting is performed at a low injection pressure.

15. A method according to claim 14, wherein the step of filling a cavity includes placing a resin composition sheet in said cavity before closing thereof.

16. A method according to claim 14, wherein the step of filing a cavity includes injecting said first resin material into said mold.

17. A method according to claim 14, wherein the step of injecting includes blending a resin material A with a resin material B immediately prior to injecting said first resin material into said mold.

18. Apparatus for handling a resin material A and a resin material B, comprising:

first means for pumping said resin material A in a first closed path from a material A tank to a blender and back to said material A tank;

second means for pumping said resin material B in a second closed path from a material B tank to said blender and back to said material B tank;

means for isolating said first closed path from said second closed path, whereby said resin material A and said resin material B are prevented from reacting with each other;

means for joining said first closed path and said second closed path, whereby said resin material A and said resin material B are blended to form an injection resin material;

means for controlling a proportion of said resin material A and said resin material B in said injection resin material;

means for injecting a predetermined quantity of said injection resin material from said blender into a cavity; and

means for again isolating said first closed path and said second closed path, following injection of said predetermined quantity, whereby said first and second means for pumping are again enabled to pump said resin material A in said first closed path and said resin material B in said second closed path.

19. A blender for blending a resin material A and a resin material B, comprising:

a first inlet for permitting said resin material A to enter said blender;

a first outlet for permitting said resin material A to exit said blender;

a first channel communicating said first inlet with said first outlet, whereby said resin material A is permitted to flow, substantially unimpeded, from said first inlet to said first outlet;

a second inlet for permitting said resin material B to enter said blender;

a second outlet for permitting said resin material B to exit said blender;

a second channel communicating said second inlet with said second outlet;

said first and second channels being separate from each other, whereby said resin material A and said resin material B remain isolated from each other;

a blending area;

an injector nozzle communicating with said blending area; and

means for communicating said first inlet and said second inlet with said blending area, and for

11

isolating said first outlet and said second outlet from their respective inlets, whereby said material A entering said first inlet is blended with said material B entering said second inlet to form a blended resin, with said blended resin issuing from said injector nozzle into a cavity.

Fig. 1a

Fig. 1b

PRIOR
ART

**110**

106

**108**

102

101

105

Fig. 1c

PRIOR
ART

**110**

107

106

**108**

102

101

105

Fig. 1d

Fig. 1e

Fig. 2a

Fig. 2b

16

PRIOR
ART

127

126

128

122

125

121

Fig.2c

PRIOR
ART

127

126

128

122

125

121

Fig.2d

Fig.3

Fig.4

Fig. 5a

Fig.5b

Fig. 6a

Fig. 6b

21

Fig. 6c

Fig. 6d

Fig. 6e

Fig. 6f